# DEMANDE DE BREVET EUROPEEN

(11) **EP 0 684 398 A1**
(43) Date de publication de la demande: **29.11.1995**
(21) Numéro de dépôt: 95401214.2
(22) Date de dépôt: 24.05.1995
(51) Int. Cl.: F16D 1/108, F16H 57/02

(54) **Dispositif d'immobilisation axiale d'un pignon et commande de marche arrière comportant un tel dispositif**

(30) Priorité: 24.05.1994 FR 9406245
(71) Demandeur: REGIE NATIONALE DES USINES RENAULT S.A., F-92109 Boulogne Billancourt (FR)
(72) Inventeur: Raoul, Michel, F-78990 Elancourt (FR); Fievet, Serge, F-78360 Montesson-la-Borse (FR); Prenel, Jean-Marc, F-78730 Saint-Arnoult-en-Yvelines (FR)

(57) **Abrégé**

L'invention propose un dispositif d'immobilisation en translation axiale d'un pignon (12) monté fou ou tournant sur un axe (14), caractérisé en ce qu'il comporte un moyen d'arrêt logé dans l'axe (14) et qui est apte à faire saillie radialement vers l'extérieur de cet axe pour arrêter le pignon (12) en translation.

## Description

La présente invention concerne un dispositif d'immobilisation d'un pignon monté fou ou tournant sur un axe.

L'invention concerne également une commande de marche arrière de boîte de vitesses à baladeur(s) comprenant un pignon de marche arrière monté fou en rotation et immobilisé en translation sur un axe ou coulisseau utilisant ce dispositif.

On connaît différents moyens pour immobiliser en translation axiale un élément tournant sur son axe.

Suivant une première solution connue, l'arbre comporte un épaulement sur lequel le pignon vient prendre appui d'un côté, et de l'autre côté un moyen d'arrêt tel que par exemple un circlips. Une bague de frottement est généralement interposée entre le circlips et le pignon.

On connaît également du document FR-A-2.511.460 un dispositif d'immobilisation en translation d'un élément tournant fou sur son axe constitué par deux goupilles placées de part et d'autre du pignon.

Ces dispositifs connus présentent des inconvénients.

D'une part ils requièrent de la place de part et d'autre du pignon. Or les contraintes dimensionnelles font que l'on ne dispose pas toujours de cet espace. C'est le cas en particulier d'une commande de marche arrière de boîte de vitesses du type mentionné ci-dessus.

D'autre part, les goupilles, telles que celles qui sont prévues dans le document FR-A-2.511.460, affaiblissent la section de l'axe, ce qui peut conduire à sa rupture.

L'invention a pour objet de proposer un dispositif d'immobilisation d'un élément tournant fou sur son axe, tel qu'un pignon de boîte de vitesses, qui remédie à ces inconvénients. Ce dispositif doit occuper le moins de place possible de part et d'autre du pignon, et il ne doit pas affaiblir la section de l'arbre qui supporte le pignon.

Ces buts sont atteints, conformément à l'invention, par le fait que le dispositif comporte un moyen d'arrêt logé dans l'axe et apte à faire saillie radialement vers l'extérieur de l'axe pour arrêter le pignon en translation.

Selon un premier mode de réalisation le moyen d'arrêt apte à faire saillie radialement vers l'extérieur de l'axe est un pion poussé radialement vers l'extérieur de l'axe et qui pénètre dans une rainure circulaire prévue dans le pignon. Cette conception présente l'avantage de n'occuper aucun espace de part et d'autre du pignon. De cette manière l'encombrement axial se limite à celui du pignon lui-même.

Selon un autre mode de réalisation, le dispositif d'immobilisation en translation selon l'invention comporte une bague montée sur l'axe et comportant une collerette, et un moyen d'arrêt pour immobiliser en translation le pignon par rapport à l'axe, du côté opposé à la collerette, le moyen d'arrêt apte à faire saillie radialement vers l'extérieur de l'axe étant constitué par un pion poussé vers l'extérieur de cet axe et apte à pénétrer dans un trou prévu dans la bague.

L'encombrement de ce mode de réalisation est légèrement supérieur à celui qui a été décrit précédemment. Toutefois il est possible, selon une variante préférée, de prévoir un dégagement sur une partie de la périphérie de la collerette afin de permettre d'approcher un pignon mobile à proximité immédiate du pignon monté fou sur l'axe.

Selon une variante préférée le pignon comporte une butée telle qu'un épaulement qui limite sa pénétration dans le trou prévu dans la bague.

Conformément à un mode de réalisation particulier, le moyen d'arrêt pour immobiliser la bague en translation par rapport à l'axe du côté opposé à la collerette est une seconde bague montée coulissante sur la première et comportant une collerette du côté du pignon opposé à la première collerette, cette seconde bague comportant un trou apte à recevoir ledit moyen d'arrêt logé dans l'axe.

La collerette de la seconde bague peut, comme la première, comporter un dégagement sur une partie de sa périphérie pour permettre d'approcher un pignon mobile à proximité immédiate du pignon monté fou sur l'axe.

De préférence le pignon comporte un trou d'accès permettant de repousser le moyen d'arrêt logé dans l'axe de manière à permettre le démontage du pignon.

Enfin, la commande de marche arrière pour une boîte de vitesses conforme à l'invention comporte un dispositif d'immobilisation en translation du pignon de marche arrière tel que celui qui vient d'être décrit.

D'autres caractéristiques et avantages de l'invention apparaîtront à la lecture de la description détaillée qui va suivre pour la compréhension de laquelle on se reportera aux dessins annexés dans lesquels :
- La figure 1 est une vue d'une partie des organes d'une boîte de vitesses incorporant un dispositif d'immobilisation conforme à l'invention ;
- la figure 2 est une vue en perspective de la collerette du dispositif d'immobilisation représenté sur la figure 1 ;
- la figure 3 illustre un autre mode de réalisation d'un dispositif d'immobilisation conforme à l'invention ;
- la figure 4 représente encore un autre mode de réalisation du dispositif d'immobilisation.

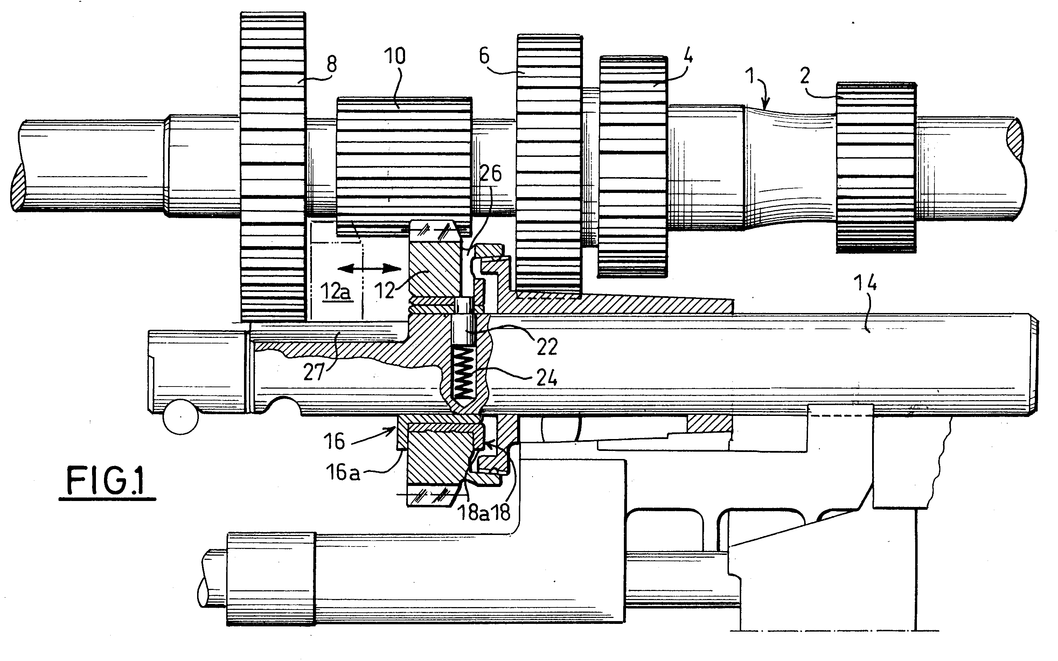

Les organes de boîte de vitesses représentés à la figure 1 comprennent un arbre d'entrée 1, ou arbre primaire, et un arbre de sortie ou arbre secondaire, parallèle à l'arbre d'entrée 1. Etant donné que l'arbre de sortie ne se trouve pas dans le plan de la figure 1, il n'a pas été représenté. L'arbre d'entrée 1, dont l'extrémité de droite est entraînée en rotation par l'intermédiaire de l'embrayage du véhicule, porte quatre pignon de rapports de marche avant référencés respectivement 2, 4, 6, 8 et un pignon d'entraînement de marche arrière 10.

L'arbre de sortie, non représenté, porte quatre pignons montés fous sur lui et engrenant en permanence avec les pignons 2, 4, 6 et 8 de marche avant.

Les rapports de marche avant peuvent être engagés sélectivement à l'aide de baladeurs, non représentés faisant partie de synchroniseurs doubles pouvant être de type quelconque et coopérant respectivement avec les crabots des pignons, non représentés en vue de leur accouplement sélectif avec l'arbre de sortie.

Le pignon de marche arrière 10 engrène avec un pignon 12.

Le pignon 12 est monté fou sur un axe ou coulisseau 14 et il est immobilisé en translation sur cet axe. Le pignon 12 peut être déplacé en translation en même temps que le coulisseau dont il est solidaire par l'intermédiaire d'un organe de sélection et d'engagement des rapports de vitesse, non représentés, de façon à venir engrener avec un pignon de l'arbre de sortie.

Sur la figure 1, le pignon 12 a été représenté en position engagée. On a représenté en trait mixte sa position de point mort 12a. On constate que dans cette position le pignon 12 vient au ras du pignon de marche avant 8 de l'arbre d'entrée 1. C'est pourquoi il est nécessaire que le dispositif qui permet d'immobiliser en translation le pignon 12 sur l'axe 14 occupe axialement le moins de place possible, et en tous cas, permette au pignon 12 de venir à proximité immédiate du pignon 8.

Le dispositif d'immobilisation axiale selon l'invention permet d'obtenir résultat.

Dans le mode de réalisation représenté sur la figure 1, le dispositif d'immobilisation comprend une première bague 16 et une seconde bague 18.

La première bague 16 est montée directement sur l'axe 14. La seconde bague 18 est montée sur la bague 16.

Chacune des bagues 16 et 18 comporte une collerette respectivement 16d et 18a. Ces collerettes sont disposées de part et d'autre du pignon 12 de manière à l'arrêter en translation axiale dans les deux sens.

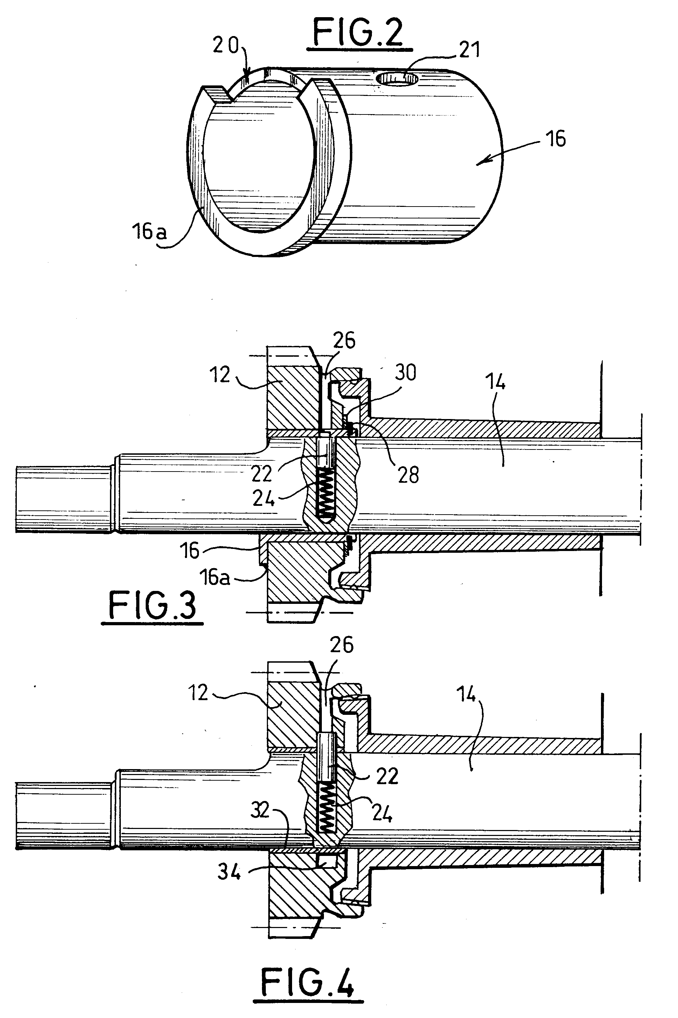

La largeur de la bague 18 est prévue de telle manière que le pignon 12 puisse coulisser librement, avec un léger jeu sur cette seconde bague 18. Afin de permettre au pignon 12 de venir à proximité immédiate du pignon 8, la collerette 16 comporte un évidement 20, illustré à la figure 2, dont la forme correspond sensiblement à celle du pignon 8.

Etant donné que l'espace disponible de l'autre côté du pignon 12 est suffisant, la collerette 18a de la seconde bague 18 ne comporte pas d'évidement. La collerette 18a est donc entièrement circulaire.

Le dispositif d'immobilisation comporte un moyen d'arrêt logé dans l'axe 14 et qui est apte à faire saillie radialement vers l'extérieur de cet axe pour pénétrer dans un trou prévu dans chacune des bagues 16 et 18.

Ce moyen d'arrêt est constitué par un pion 22 comportant un épaulement. Le pion 22 est poussé par un ressort 24 vers l'extérieur de l'axe. Il pénètre dans des trous, tels que le trou 21 (voir figure 2), pratiqués sur chacune des bagues 16 et 18. On a prévu en outre (dans le pignon 12) un trou d'accès 26 permettant d'enfoncer une tige de manière à repousser le pion 22 à l'encontre de la force du ressort afin de permettre le démontage des bagues 16 et 18 et par suite du pignon 12.

L'épaulement prévu sur le pion 22 a pour fonction de prendre appui sur la surface intérieure de la bague 16 de manière à limiter son déplacement vers l'extérieur afin qu'il ne vienne pas frotter contre le pignon 12.

On remarquera que le trou transversal pratiqué dans l'axe 14 et dans lequel est logé le pion 22 réduit sensiblement la section de cet axe. Mais il convient de souligner qu'il est situé dans une zone où la section de l'axe 14 n'est pas elle-même réduite. En effet on notera que, sur la gauche du pignon 12, on a pratiqué un fraisage cylindrique 27 qui fournit un dégagement suffisant pour le pignon de marche avant 8 de l'arbre primaire. C'est précisément dans cette zone affaiblie que se trouvait l'une des goupilles de l'art antérieur décrit précédemment. Compte tenu du fait, que selon l'invention, le trou qui reçoit le pion 22 est prévu dans une portion non affaiblie du l'axe 14, la résistance mécanique de ce dernier n'est pas diminuée.

On a représenté sur la figure 3 un second mode de réalisation de l'invention. Ce mode de réalisation se distingue de celui qui a été décrit en référence aux figures 1 et 2 par le fait qu'il ne comporte qu'une seule bague 16 comportant une collerette 16a. Du côté opposé à la collerette 16a la bague 16 comporte un moyen d'arrêt qui permet d'immobiliser en translation le pignon 12 par rapport à l'axe. Ce moyen d'arrêt est constitué par un circlips 28 et par une bague de frottement 30 interposée entre le pignon 12 et le circlips. Ainsi, le pignon 12 est immobilisé en translation sur son côté gauche, en considérant la figure 3, par la collerette 16a et sur son côté droit par la bague de frottement et le circlips 28.

Selon une variante de réalisation le circlips et la bague de frottement pourraient être montés directement sur l'axe 14.

Le trou d'accès 26 permet de repousser le pion 22 à l'encontre de la force du ressort 24 et de démonter ainsi, en une seule opération, l'ensemble constitué par le pignon, la bague 16, le circlips et la bague de frottement.

On a représenté sur la figure 4 un troisième mode de réalisation de l'invention. Il ne comporte pas de bague à collerette, mais une bague 32 qui est réalisée en un matériau anti-friction, et qui est montée sur l'arbre 14. Le pignon 12 comporte une rainure circulaire 34 pratiquée sur toute sa périphérie. Un pion 22 pénètre dans la rainure circulaire 34.

Ainsi, le pignon 12 est immobilisé en translation par rapport à l'axe 14 par le pion 22. En revanche, il est libre en rotation par rapport à cet axe par le fait que le pion 22 coulisse dans la rainure circulaire 34. Ce mode de réalisation est celui qui présente l'encombrement axial le plus faible. En effet, l'espace disponible est limité seulement par l'encombrement du pignon lui-même.

## Revendications

1. Dispositif d'immobilisation en translation axiale d'un pignon (12) monté fou ou tournant sur un axe (14), caractérisé en ce qu'il comporte un moyen d'arrêt logé dans l'axe (14) et qui est apte à faire saillie radialement vers l'extérieur de cet axe pour arrêter le pignon (12) en translation.

2. Dispositif selon la revendication 1, caractérisé en ce que le moyen d'arrêt apte à faire saillie radialement vers l'extérieur de l'axe (14) est un pion (22) poussé vers l'extérieur de l'axe par un ressort (24) et qui pénètre dans une rainure circulaire (34) prévue dans le pignon (12).

3. Dispositif selon la revendication 1, caractérisé en ce qu'il comporte une bague (16) montée sur l'axe (14) et comportant une collerette (16a), et un moyen d'arrêt (18, 28, 30) pour immobiliser en translation le pignon (12) par rapport à l'axe (14) du côté opposé à la collerette (16a), le moyen d'arrêt (22) apte à faire saillie radialement vers l'extérieur de l'axe (14) étant constitué par un pion (22) poussé vers l'extérieur et qui est apte à pénétrer dans un trou (21) prévu dans la bague (16).

4. Dispositif selon la revendication 3, caractérisé en ce que le pion (22) comporte une butée telle qu'un épaulement qui limite sa pénétration dans le trou (21) prévu dans la bague (16).

5. Dispositif selon l'une quelconque des revendications 3 et 4, caractérisé en ce que le moyen d'arrêt pour immobiliser le pignon (12) en translation par rapport à l'axe (14), du côté opposé à la collerette (16) est une seconde bague (18) montée coulissante sur la première et comportant une collerette (18a) du côté du pignon (12) opposé à la première collerette (16a), cette seconde bague (18) comportant un trou apte à recevoir ledit moyen d'arrêt logé (22) dans l'axe.

6. Dispositif selon l'une quelconque des revendications 3 à 5, caractérisé en ce que l'une au moins des collerettes (16a, 18a) des deux bagues (16, 18) comporte un dégagement (20) sur une partie de sa périphérie pour permettre d'approcher un pignon (8) à proximité immédiate du pignon (12).

7. Dispositif selon l'une quelconque des revendications 1 à 6, caractérisé en ce que le pignon (12) comporte un trou d'accès (26) permettant de repousser le moyen d'arrêt (22) logé dans l'axe (14) de manière à permettre le démontage du pignon (12).

8. Commande de marche arrière pour une boîte de vitesses à baladeurs comprenant un pignon de marche arrière (12) monté fou en rotation et immobilisé en translation sur un axe ou coulisseau (14), caractérisée en ce qu'elle comporte un dispositif d'immobilisation en translation du pignon de marche arrière (12) selon l'une quelconque des revendications précédentes.
